(19) Europäisches Patentamt / European Patent Office / Office européen des brevets

(11) **EP 1 984 758 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(51) Int Cl.:
*G01V 8/00* *(2006.01)*

(21) Anmeldenummer: 06829278.8

(22) Anmeldetag: **05.12.2006**

(86) Internationale Anmeldenummer:
**PCT/EP2006/011630**

(87) Internationale Veröffentlichungsnummer:
**WO 2007/093208 (23.08.2007 Gazette 2007/34)**

(54) **VERFAHREN UND VORRICHTUNG ZUR HOCHAUFLÖSENDEN ABBILDUNG VON PRÜFOBJEKTEN**

METHOD AND APPARATUS FOR HIGH-RESOLUTION IMAGING OF TEST OBJECTS

PROCEDE ET DISPOSITIF DE REPRESENTATION EN HAUTE RESOLUTION D'OBJETS CONTROLES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2006 DE 102006006962**

(43) Veröffentlichungstag der Anmeldung:
**29.10.2008 Patentblatt 2008/44**

(73) Patentinhaber:
- **Smiths Heimann GmbH**
  **65205 Wiesbaden (DE)**
- **Friedrich-Alexander-Universität Erlangen-Nürnberg**
  **91054 Erlangen (DE)**

(72) Erfinder:
- **WEINZIERL, Jochen**
  **90449 Nürnberg (DE)**

- **GUMBMANN, Frank**
  **91007 Oberreichenbach (DE)**
- **TRAN, Hue, Phat**
  **91056 Erlangen (DE)**
- **SCHMIDT, Lorenz-Peter**
  **91093 Hessdorf (DE)**
- **JECK, Michael**
  **55122 Mainz (DE)**

(74) Vertreter: **Thul, Hermann**
**Thul Patentanwaltsgesellschaft mbH**
**Rheinmetall Platz 1**
**40476 Düsseldorf (DE)**

(56) Entgegenhaltungen:
WO-A-2005/050160    GB-A- 2 399 947
US-A1- 6 137 437    US-A1- 2003 178 034

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur hochauflösenden Abbildung von Prüfobjekten mittels elektromagnetischer Wellen, insbesondere zur Kontrolle von Personen auf verdächtige Gegenstände, bei dem das Prüfobjekt mit elektromagnetischen Wellen beleuchtet wird und die gestreuten Wellen empfangen und für eine bildhafte Darstellung des Prüfobjekts nach dem Prinzip des "synthetic aperture radar" (SAR) ausgewertet werden.

Zur Kontrolle von Personen oder Gepäckstücken (nachfolgend als Prüfobjekte bezeichnet) auf versteckte gefährliche Gegenstände (Waffen, Explosivstoffe) sind Abbildungssysteme bekannt, bei denen die Prüfobjekte (Personen, Gepäckstücke) mit Millimeterwellen abgescannt werden, um verdächtige Gegenstände zu detektieren (US 5,859,609). Der Vorteil dieser Abbildungssysteme besteht darin, dass neben metallischen Gegenständen auch nichtmetallische Gegenstände aufgrund ihrer materialspezifischen dielektrischen Eigenschaften gut detektiert werden können. Ebenso hat der Einsatz von radarbasierten Millimeterwellen-Abbildungssystemen im Bereich der zerstörungsfreien Materialprüfung (NDT: "Non Destructive Testing") stark zugenommen.

Um eine sichere Detektion von gefährlichen Gegenständen bei der Anwendung in der Sicherheitstechnik oder von Störstellen bei der Anwendung in der zerstörungsfreien Materialprüfung zu gewährleisten, benötigen die Abbildungssysteme ein hohes räumliches Auflösungsvermögen. Darüber hinaus ist es insbesondere bei der Anwendung in der Sicherheitstechnik erwünscht, dass das System in der Lage ist, innerhalb kurzer Zeit einen möglichst großen Bereich abzubilden.

Eine hohe Auflösung in einer Ebene (laterale Auflösung) lässt sich mit fokussierenden Elementen, beispielsweise elliptischen Spiegeln oder dielektrischen Linsen, erzielen, die das Messsignal auf der Oberfläche des Prüfobjektes scharf fokussieren. Diese Art der Fokussierung weist jedoch eine mangelnde Tiefenschärfe auf. Eine hohe Auflösung ist nur in einer Ebene, der Fokusebene, gegeben. Als weiter Nachteil tritt hinzu, dass sich bei der Realisierung schneller abtastender Systeme unter Verwendung großer dielektrischer Linsen oder Spiegel für eine Bündelung der Mess-Signale eine schnelle Bewegung der großen Massen mechanisch nur schwer zu bewerkstelligen ist.

Die Deutsche Patentanmeldung 10 2005 042 463 beschreibt ein Verfahren der gattungsgemäßen Art, bei dem ein Prüfobjekt entlang seines Umfangs sukzessive mit Millimeterwellen beleuchtet wird, die gestreuten Wellen empfangen und für eine bildhafte Darstellung des Prüfobjekts nach dem Prinzip des "synthetic aperture radar" (SAR) ausgewertet werden. Eine synthetische Apertur wird dadurch erzeugt, dass die von einer Antenne ausgestrahlten Wellen zunächst räumlich gebündelt werden, wobei die Stelle hoher Bündelung so manipuliert wird, dass sie als bewegte virtuelle Antenne für eine SAR-Auswertung dient.

Bei diesem Abbildungssystem nach dem SAR-Prinzip ist es bekannt, neben einer Antenne (monostatisch) oder mehrerer benachbarter Antennen (quasimonostatisch), beispielsweise Horn-Antennen, zum Senden und Empfang der vom Prüfobjekt reflektierten Radarsignale keine weiteren fokussierenden Bauelemente zur Strahlformung zu verwenden. Die eigentliche Fokussierung wird dabei nachträglich durch eine digitale Signalverarbeitung nach dem SAR-Verfahren erzielt. Diese Art der Datenverarbeitung erlaubt eine digitale Fokussierung der Rohdaten für jede beliebige Entfernung der Antenne vom Prüfobjekt. Auf weitere fokussierende Elemente wie Spiegel oder Linsen kann verzichtet werden, daher reduziert sich die Masse der zu bewegenden Millimeterwellen-Sensoren drastisch.

Soll eine hohe laterale Auflösung in zwei Dimensionen (Vertikal und Horizontal) bei der SAR-Verarbeitung erreicht werden, so muss das Phasenzentrum jeder Sende-und/oder Empfangsantenne ebenfalls in zwei Dimensionen bewegt werden. Dies wird bekannterweise durch eine lineare Bewegung in horizontaler und vertikaler Richtung erzielt. Die Bewegung von zwei Achsen (beispielsweise Rasterscan) wäre für ein schnell abbildendes System zu langsam.

Der Erfindung liegt daher die Aufgabe zugrunde, ein Verfahren zur Abbildung von Prüfobjekten mittels elektromagnetischer Wellen bereitzustellen, das in kurzer Zeit einen möglichst großen Bereich mit hoher Auflösung abbilden kann.

Diese Aufgabe wird nach der Erfindung dadurch gelöst, dass die Phasenzentren der Sende- und Empfangsantennen auf einer Kreisbahn parallel zu den jeweiligen digitalen Fokusebenen des Abbildungssystems bewegt und gleichzeitig in einer weiteren Richtung parallel zur jeweiligen Fokusebene linear verschoben werden. Die Linearverschiebung kann dabei in vertikaler, horizontaler oder schräger Richtung erfolgen.

Aufgrund der Rotation der Antennenapertur, also der zweidimensionalen Bewegung des Antennenphasenzentrums, ist eine SAR-Verarbeitung der Signale in vertikaler und horizontaler Richtung möglich.

Die Unteransprüche enthalten bevorzugte, da besonders vorteilhafte Ausführungsformen der Erfindung.

Nachfolgend wird das Prinzip eines erfindungsgemäßen SAR-Abbildungssystems, ein bevorzugter mechanischer Aufbau, sowie die Signalverarbeitung anhand von Ausführungsbeispielen näher erläutert. Dabei zeigen

Figur 1        das Prinzip der Antennenbewegung,

Figur 2 - 5    jeweils Teile des mechanischen Aufbaus in verschiedenen Ansichten,

Figur 6      die Abbildung der gemessenen Rohdaten in ein kartesisches Koordinatensystem bei der Signalverarbeitung,

Figur 7      das Flussdiagramm der SAR-Verarbeitung mit ortsinvariantem Korrekturfilter,

Figur 8      das Flussdiagramm der SAR-Verarbeitung mit einem ortsvarianten Korrekturfilter.

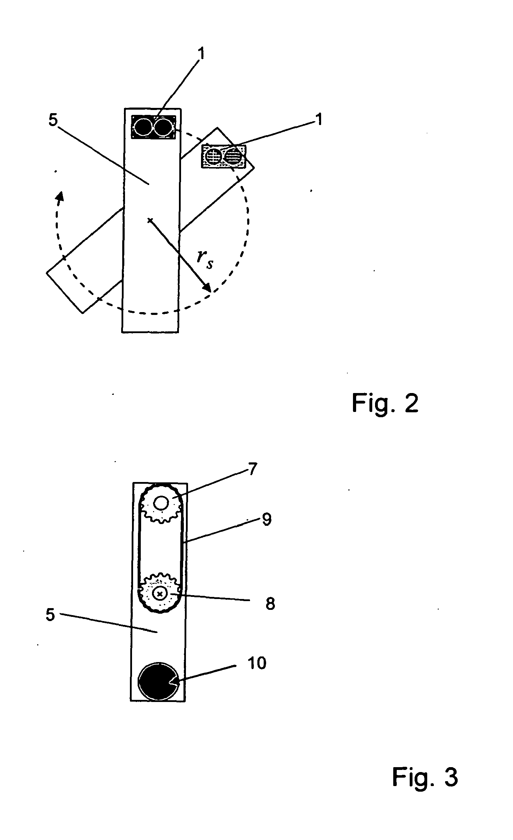

Die nachfolgend beschriebenen Abbildungssysteme sind jeweils Teil einer Prüfvorrichtung, die zur Kontrolle von Flugpassagieren auf einem Flughafen dient. Mit der Prüfvorrichtung werden die Flugpassagiere beim Check-in auf verdächtige Gegenstände wie Waffen oder Explosivstoffe geprüft. Die zur Beleuchtung der Prüfobjekte verwendeten elektromagnetischen Wellen haben eine Frequenz zwischen 1 GHz und 10 THz. Bevorzugt werden Millimeterwellen mit einer Frequenz zwischen 30 GHz und 300 GHz verwendet. Zum Empfang der reflektierten Wellen können entweder die Sendeantennen selbst oder - wie in den Figuren 3 bis 5 dargestellt - Antennenpaare mit getrennten Empfangsantennen verwendet werden. Als Sende- und/oder Empfangsantennen werden bevorzugt Aperturstrahler, insbesondere Horn-Antennen, eingesetzt.

Bevorzugt enthält die Prüfvorrichtung eine Plattform, auf der sich das Prüfobjekt, beispielsweise ein Flugpassagier, befindet, während die Kontrolle durchgeführt wird. Dabei rotieren die Sende- und Empfangssysteme um das stillstehende Prüfobjekt, um es entlang seines Umfanges sukzessiv mit Millimeterwellen zu beleuchten. Weiterhin enthält die Prüfvorrichtung ein Auswertesystem mit entsprechender Rechnerleistung, von dem die empfangenen, vom Prüfobjekt gestreuten Wellen nach dem SAR-Prinzip ausgewertet werden, um eine bildhafte Darstellung des Prüfobjekts zu erhalten. Die erstellten Bilder werden einer Bedienungsperson auf entsprechenden Anzeigegeräten angezeigt.

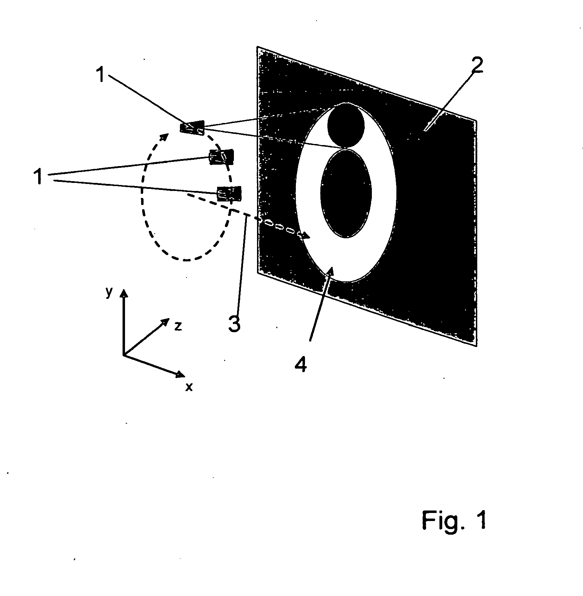

In Figur 1 ist das Prinzip der Antennenbewegung dargestellt. Sende- und Empfangsantennen (Antennenpaar 1) sind in der Prüfvorrichtung so bewegbar gelagert, dass sich ihre Phasenzentren auf einer Kreisbahn parallel zu den jeweiligen digitalen Fokusebenen 2 des Abbildungssystems bewegen und gleichzeitig in einer weiteren Richtung parallel zu der jeweiligen Fokusebene 2 linear verschoben werden. Zur Vereinfachung ist in Figur 1 die digitale Fokusebene 2, also abzutastende Fläche des Prüfobjekts, als Ebene gewählt, die sich parallel zur x-y-Ebene erstreckt. Die Rotationsbewegung der Sende- und Empfangsantennen 1 erfolgt daher ebenfalls parallel zur x-y-Ebene. Die zusätzliche Linearverschiebung der Sende- und Empfangsantennen 1 erfolgt parallel zur jeweiligen Fokusebene 2, im Beispiel horizontal in x-Richtung (Pfeil 3). Die Linearverschiebung kann auch in vertikaler oder schräger Richtung erfolgen. Das Prüfobjekt wird so in einem Kreisring 4 abgetastet, der linear verschoben wird. Da die Fokusebene 2 digital bestimmt wird, kann sie auch als gekrümmte Fläche, beispielsweise als Zylinderfläche, oder als Fläche gewählt werden, die Berge und Täler aufweist.

Die wesentlichen Teile des mechanischen Aufbaus eines erfindungsgemäßen Abbildungssystems sind in den Figuren 2 (Vorderansicht), 3 (Rückansicht) und 4 (Seitenansicht) dargestellt:

Für die SAR-Verarbeitung sowie für eine eindeutige Interpretation der Messergebnisse ist es notwendig, dass die Sende- und Empfangsantennen (Antennenpaar 1) während der Drehung jeweils die gleiche Polarisationsrichtung empfangen. Dabei ist sowohl eine drehende Polarisation als auch eine fest fixierte Polarisationsrichtung möglich. In den Figuren 2 bis 4 ist eine Befestigung des Antennenpaares dargestellt, bei der die Polarisation der gesendeten und empfangenen elektromagnetischen Wellen während der Drehung des Antennenpaares 1 erhalten bleibt und ein Verdrillen der Anschlussleitungen verhindert wird.

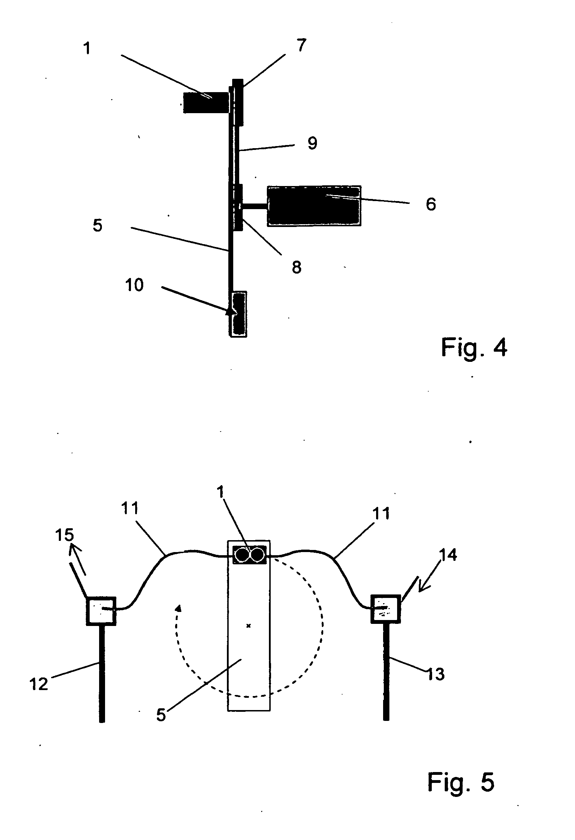

Das Antennenpaar 1 ist dazu mit einem Kugellager drehbar in einer Hülse gelagert. Die Hülse ist fest mit einem Drehhebel 5 verbunden, der in der Vorrichtung um seinen Mittelpunkt mittels eines Drehantriebs 6 drehbar gelagert ist. Zusätzlich ist das Antennenpaar 1 über eine Kombination aus zwei Zahnrädern 7, 8 und einem Keilriemen 9 mit dem Drehantrieb 6 des Drehhebels 5 verbunden, wobei ein Übersetzungsverhältnis 1:1 festgelegt ist, wie in den Figuren 3 und 4 dargestellt ist. Die Verbindung der Lagerung des Antennenpaars 1 über das Zahnrad-Keilriemen-Getriebe in einem Übersetzungsverhältnis 1:1 mit dem Antrieb 6 des Drehhebels 5 gewährleistet, dass beide Antennen des Antennenpaars 1 für jede Position auf der Kreisbahn die gleiche Ausrichtung aufweisen, wie in Figur 2 dargestellt ist. Damit sich das Antennenpaar 1 auf der Kreisbahn mit dem Radius r ohne Unwucht gleichmäßig bewegt, ist an dem anderen Ende des Drehhebels 5 ein Gegengewicht 10 befestigt.

Für die Verbindung der Antennen mit der Sende- und Empfangseinheit werden Wellenleiter benötigt, die eine hohe Flexibilität auch bei großen Drehzahlen der Antennen aufweisen. Dies wäre in Koaxial- oder Hohlleitertechnik nur mit einem enormen technischen Aufwand, insbesondere für einen Frequenzbereich oberhalb von 50 GHz zu realisieren.

Daher werden - wie in Figur 5 dargestellt - bevorzugt flexible Leitungen in Form von dielektrischen Wellenleitern 11 mit entsprechenden Übergangsadaptern an Hohlleitersysteme verwendet. Die dielektrischen Wellenleiter 11 werden in angepassten Halterungen 12, 13 fixiert und leiten die Sendesignale 14 zu der Sendeantenne und die Empfangssignale 15 von der Empfangsantenne zu dem Auswertesystem. Dielektrische Wellenleiter haben den weiteren Vorteil, dass sie im Millimeterwellenbereich im Vergleich zur Hohlleiter- und Koaxialleitungstechnik eine geringe Dämpfung aufweisen.

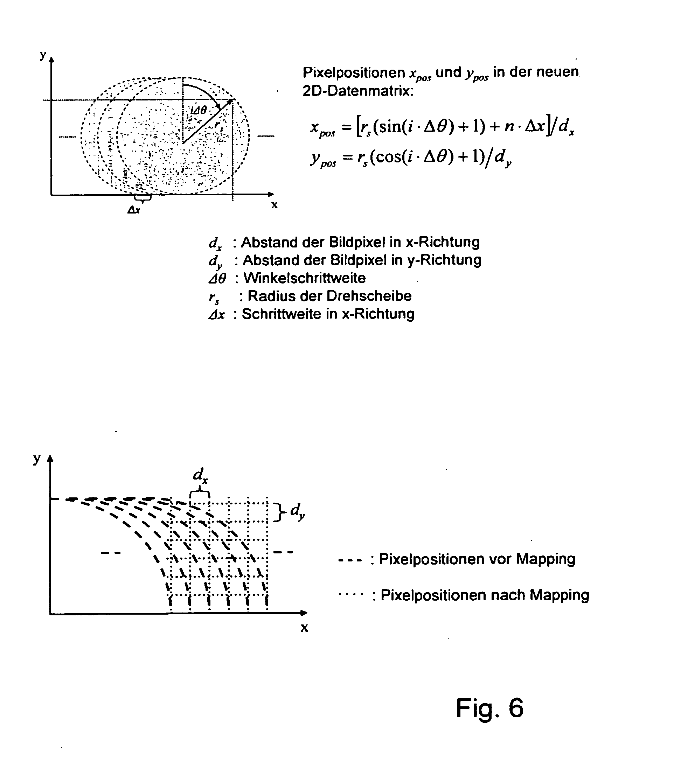

Die bevorzugte Signalverarbeitung wird nachfolgend mit Hilfe der Figuren 6 bis 8 näher erläutert:

In der konventionellen SAR-Verarbeitung wird ein ortsinvarianter Korrekturfilter verwendet. Dies bedeutet, dass zur Rekonstruktion jedes Pixels derselbe Korrekturterm Verwendung findet. Dies ermöglicht eine Datenverarbeitung mit konventionellen Faltungs- oder den zeiteffizienteren FFT (Fast Fourier Transform)-Algorithmen.

Dieses ortsinvariante Korrekturfilter lässt sich im Falle einer Abbildungsgeometrie mit rein kartesischen, Polar- oder Kugelkoordinaten verwenden. Im Fall des rotierenden Antennenpaares 1, das zusätzlich - wie in Figur 1 dargestellt - linear in vertikaler oder horizontaler Richtung verschoben wird, liegt eine Kombination aus linearer Bewegung in kartesischen und in Polarkoordinaten vor.

Diese Kombinationsbewegung erfordert im Gegensatz zu konventionellen SAR-Anwendungen einige zusätzliche Verarbeitungsschritte. Nach der Erfindung sind für die Signalverarbeitung zwei unterschiedliche Methoden möglich:

1. eine genäherte SAR-Rekonstruktion in kartesischen Koordinaten mit ortsinvariantem Korrekturterm, oder
2. eine exakte Rekonstruktion im gemischten Koordinatensystem (kartesisches und polares Koordinatensystem) mit ortsvariantem Korrekturterm.

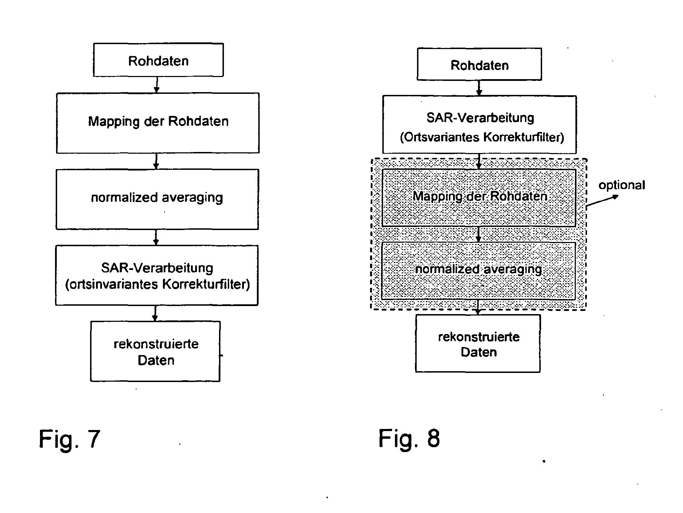

Das Flussdiagramm der SAR-Rekonstruktion in kartesischen Koordinaten mit ortsinvariantem Korrekturfilter (Methode 1) ist in Figur 7 dargestellt:

Um eine SAR-Verarbeitung mit konventionellen Algorithmen aus der Literatur durchzuführen, wird zunächst eine Abbildung der gemessenen Rohdaten in ein kartesisches Koordinatensystem durchgeführt. Dieses Mapping der Rohdaten ist in Figur 6 dargestellt. Die Abstände einzelner Gitterpunkte $dx$, $dy$ innerhalb des neuen Koordinatensystems werden dabei manuell gewählt.

Aufgrund der Abbildung der Rotations- und Linearbewegung in ein kartesisches Koordinatensystem ergibt sich eine neue Rohdatenmatrix mit ungleicher Pixeldichte. Um dies zu beheben, wird anschließend eine Interpolation nach dem Prinzip des "normalized averaging" durchgeführt. Abschließend erfolgt eine SAR-Verarbeitung mit ortsinvariantem Korrekturfilter. Dies kann durch konventionelle SAR-Algorithmen umgesetzt werden.

Die Figur 8 zeigt das Flussdiagramm einer exakten Rekonstruktion mit ortsvariantem Korrekturfilter (Methode 2).

Die exakte, aber zeitaufwendigere Rekonstruktion der Rohdaten wird bei dieser Methode mit einem ortsvarianten Korrekturfilter durchgeführt. Dabei wird für jedes Pixel ein separater Korrekturterm benötigt. Die exakte Rekonstruktion des Prüfobjektes $f(x, y, z = Z_0)$ für die Entfernung $Z_0$ zwischen Sende- und Empfangsantenne 1 und dem Prüfobjekt kann mathematisch wie folgt beschrieben werden. Dabei bezeichnet $s(x, y, \omega)$ die Rohdaten bei verschiedenen Kreisfrequenzen $\omega$:

$r_0$ : Abstand vom Koordinatenursprung zum Pixel bzw. Bildpunkt der rekonstruiert werden soll

$r_P$ : Abstand vom Koordinatenursprung zu den umliegenden Pixel bzw. Bildpunkten

$\varphi$ : Winkelposition auf der Kreisbahn der Sende-/Empfangsantenne

$\Delta x$: Schrittweite der Linearbewegung in horizontaler oder vertikaler Richtung

$$f(x_0, y_0, z_0 = Z_0, \omega) = \iint s(x, y, \omega) e^{j2k|\vec{r}_P(x,y,z) - \vec{r}_0(x_0, y_0, z_0)|} dx\, dy$$

$$\vec{r}_P(x, y, z) = x \cdot \vec{e}_x + y \cdot \vec{e}_y + z \cdot \vec{e}_z$$

$$\vec{r}_0(x_0, y_0, z_0) = x_0 \cdot \vec{e}_x + y_0 \cdot \vec{e}_y + z_0 \cdot \vec{e}_z$$

Die Integration wird im Realfall durch eine Summation ersetzt, da nur diskrete Messpunkte vorhanden sind.

Die Positionen auf der Sende- und Empfangsapertur lassen sich in kartesischen Koordinaten wie folgt bestimmen.

Koordinaten des zu rekonstruierenden Bildpunktes:

$x_0 = \tilde{x}_0 + r\cos(\varphi_0)$    $r$ : Radius der Kreisbahn der Sende- /Empfangsapertur

$y_0 = r\sin(\varphi_0)$    $\varphi_0$ : Winkelposition auf der Kreisbahn der Sende-/Empfangsantenne

$z_0 = Z_0$    $\tilde{x}_0$ : Position in horizontaler bzw. vertikaler Richtung aufgrund der linearen Bewegung

Koordinaten der Bildpunkte:

$x = \tilde{x} + r\cos(\varphi)$    $r$ : Radius der Kreisbahn der Sende- /Empfangsapertur

$y = r\sin(\varphi)$    $\varphi$ : Winkelposition auf der Kreisbahn der Sende-/ Empfangsantenne

$z = 0$    $x_{3dB}$ : Abmessung des Antennenspots in der Objektebene bzgl. der x-Achse

$\tilde{x} \in [\tilde{x}_0 - \tilde{x}_{3dB}/2, \tilde{x}_0 + \tilde{x}_0 + x_{3dB}/2], \varphi \in [\varphi_0 + \varphi_{3dB}/2, \varphi_0 - \varphi_{3dB}/2]$    $x_{3dB} = 2Z_0 \cdot a\tan(\varphi_{3db}/2)$

$\varphi_{3db}$ : 3dB-Hauptkeulenbreite der Sende-/Empfangsapertur

Zusammenfassend läßt sich der Phasenterm $\varphi(x,x_0,y,y_0,z,z_0)$ des ortsvarianten Korrekturfilters wie folgt formulieren:

$$\varphi(x, x_0, y, y_0, z, z_0) = 2k\left|\vec{r}_P(x,y,z) - \vec{r}_0(x_0, y_0, z_0)\right| =$$
$$= 2k\sqrt{(x-x_0)^2 + (y-y_0)^2 + (z-z_0)^2} =$$
$$= 2k\sqrt{(\tilde{x} - \tilde{x}_0 + r[\cos(\varphi) - \cos(\varphi_0)])^2 + (r[\sin(\varphi) - \sin(\varphi_0)])^2 + Z_0^2}$$

Nach einer pixelweisen Rekonstruktion mit dem ortsvarianten Korrekturfilter können die Daten wiederum in ein kartesisches Koordinatensystem abgebildet werden und durch das Interpolationsverfahren "normalized averaging" kann wiederum der Effekt der ungleichen Pixeldichte behoben werden.

**Patentansprüche**

1. Verfahren zur hochauflösenden Abbildung von Prüfobjekten mittels elektromagnetischer Wellen, insbesondere zur Kontrolle von Personen auf verdächtige Gegenstände, bei dem das Prüfobjekt mit elektromagnetischen Wellen beleuchtet wird und die gestreuten Wellen empfangen und für eine bildhafte Darstellung des Prüfobjekts nach dem Prinzip des "synthetic aperture radar" (SAR) ausgewertet werden, **dadurch gekennzeichnet, dass** die Phasenzentren der Sende- und Empfangsantennen (1) auf einer Kreisbahn parallel zu den jeweiligen digitalen Fokusebenen (2) des Abbildungssystem bewegt und gleichzeitig in einer weiteren Richtung parallel zur jeweiligen Fokusebene (2) linear verschoben werden.

2. Verfahren nach Anspruch 1, **dadurch gekennzeichnet, dass** als Sende- und Empfangsantennen (1) Aperturstrahler, insbesondere Horn-Antennen, verwendet werden.

3. Verfahren nach Anspruch 1 oder 2, **dadurch gekennzeichnet, dass** zur Beleuchtung der Prüfobjekte elektromagnetische Wellen mit einer Frequenz zwischen 1 GHZ und 10 THz, bevorzugt zwischen 30 GHz und 300 GHz, verwendet werden.

4. Verfahren nach einem der Ansprüche 1 bis 3, **dadurch gekennzeichnet, dass** bei der SAR-Verarbeitung ein ortsinvarianter Korrekturfilter für eine Rekonstruktion der Rohdaten verwendet wird.

5. Verfahren nach einem der Ansprüche 1 bis 3, **dadurch gekennzeichnet, dass** die Rohdaten mit einem ortsvarianten Korrekturfilter rekonstruiert werden.

**6.** Vorrichtung zur Durchführung eines Verfahrens nach den Ansprüchen 1 bis 5 mit folgenden Merkmalen:

- eine Sende- und Empfangsantenne (1), von der elektromagnetische Wellen, insbesondere Millimeterwellen, ausgestrahlt und empfangen werden, und
- ein Auswertesystem, das für eine bildhafte Darstellung des Prüfobjekts nach dem Prinzip des "synthetic aperture radar" (SAR) die empfangenen Wellen auswertet, wobei
- die Sende- und Empfangsantenne (1) auf einer Kreisbahn parallel zu den jeweiligen digitalen Fokusebenen des Abbildungssystem bewegbar und gleichzeitig in einer weiteren Richtung parallel zur jeweiligen Fokusebene linear verschiebbar ist.

**7.** Vorrichtung nach Anspruch 6, **dadurch gekennzeichnet, dass** die Sende- und Empfangsantenne (1) drehbar an einem Drehhebel (5) gelagert ist, der mittels eines Drehantriebs (6) drehbar ist, wobei die Sende- und Empfangsantenne (1) so mit dem Drehantrieb (6) verbunden ist, dass sie in jeder Position auf der Kreisbahn die gleiche Ausrichtung aufweist.

**8.** Vorrichtung nach Anspruch 6 oder 7, **dadurch gekennzeichnet, dass** flexible Leitungen in Form von dielektrischen Wellenleitern (11) verwendet werden, um die Sende- und Empfangssignale (14, 15) weiterzuleiten.


**Claims**

**1.** Method for high-resolution imaging of test objects using electromagnetic waves, in particular for checking persons for suspicious articles, in which the test object is irradiated using electromagnetic waves and the scattered waves are received and evaluated for displaying the test object in the manner of an image according to the principle of "synthetic aperture radar" (SAR), **characterized in that** the phase centres of the transmitting and receiving antennas (1) are moved along a circular path parallel to the respective digital focal planes (2) of the imaging system and, at the same time, are linearly displaced in another direction parallel to the respective focal plane (2).

**2.** Method according to Claim 1, **characterized in that** aperture emitters, in particular horn antennas, are used as transmitting and receiving antennas (1).

**3.** Method according to Claim 1 or 2, **characterized in that** electromagnetic waves with a frequency of between 1 GHz and 10 THz, preferably between 30 GHz and 300 GHz, are used for irradiating the test objects.

**4.** Method according to one of Claims 1 to 3, **characterized in that**, during SAR processing, a spatially invariant correction filter is used for a reconstruction of the raw data.

**5.** Method according to one of Claims 1 to 3, **characterized in that** the raw data is reconstructed using a spatially variant correction filter.

**6.** Apparatus for carrying out a method according to Claims 1 to 5, having the following features:

- a transmitting and receiving antenna (1), which emits and receives electromagnetic waves, in particular millimetre waves, and
- an evaluation system which evaluates the received waves for displaying the test object in the manner of an image according to the principle of "synthetic aperture radar" (SAR), wherein
- the transmitting and receiving antenna (1) is movable along a circular path parallel to the respective digital focal planes of the imaging system and, at the same time, is linearly displaceable in another direction parallel to the respective focal plane.

**7.** Apparatus according to Claim 6, **characterized in that** the transmitting and receiving antenna (1) is mounted rotatably on a rotational lever (5), which is rotatable using a rotary drive (6), wherein the transmitting and receiving antenna (1) is connected to the rotary drive (6) such that it has the same orientation in every position on the circular path.

**8.** Apparatus according to Claim 6 or 7, **characterized in that** flexible lines in the form of dielectric waveguides (11) are used in order to pass on the transmitting and receiving signals (14, 15).

**Revendications**

1. Procédé de représentation à haute résolution d'objets à contrôler au moyen d'ondes électromagnétiques, notamment pour contrôler si des personnes possèdent des objets suspects, selon lequel l'objet à contrôler est éclairé par des ondes électromagnétiques et les ondes diffusées sont reçues et interprétées pour une représentation imagée de l'objet à contrôler selon le principe du radar à synthèse d'ouverture (RSO), **caractérisé en ce que** les centres des phases des antennes d'émission et de réception (1) se déplacent sur une trajectoire circulaire parallèlement aux plans focaux (2) numériques respectifs du système de représentation et sont simultanément décalés linéairement dans une autre direction parallèlement au plan focal (2) correspondant.

2. Procédé selon la revendication 1, **caractérisé en ce que** les antennes d'émission et de réception (1) utilisées sont des antennes à ouverture, notamment des antennes à cornet.

3. Procédé selon la revendication 1 ou 2, **caractérisé en ce que** des ondes électromagnétiques ayant une fréquence entre 1 GHz et 10 THz, de préférence entre 30 GHz et 300 GHz, sont utilisées pour l'éclairage des objets à contrôler.

4. Procédé selon l'une des revendications 1 à 3, **caractérisé en ce qu'**un filtre de correction localement invariant est utilisé lors du traitement du RSO pour une reconstruction des données brutes.

5. Procédé selon l'une des revendications 1 à 3, **caractérisé en ce que** les données brutes sont reconstruites avec un filtre de correction localement variant.

6. Dispositif pour mettre en oeuvre le procédé selon l'une des revendications 1 à 5, ayant les caractéristiques suivantes :

   - une antenne d'émission et de réception (1) par laquelle sont émises et reçues des ondes électromagnétiques, notamment des ondes millimétriques, et
   - un système d'interprétation qui interprète les ondes reçues pour une représentation imagée de l'objet à contrôler selon le principe du radar à synthèse d'ouverture (RSO),
   - l'antenne d'émission et de réception (1) pouvant se déplacer sur une trajectoire circulaire parallèlement aux plans focaux numériques respectifs du système de représentation et pouvant être simultanément décalée linéairement dans une autre direction parallèlement au plan focal correspondant.

7. Dispositif selon la revendication 6, **caractérisé en ce que** l'antenne d'émission et de réception (1) est montée de manière rotative sur un levier rotatif (5) qui peut être mis en rotation au moyen d'un entraînement rotatif (6), l'antenne d'émission et de réception (1) étant ainsi reliée avec l'entraînement rotatif (6) de telle sorte qu'elle présente la même orientation dans n'importe quelle position sur la trajectoire circulaire.

8. Dispositif selon la revendication 6 ou 7, **caractérisé en ce que** des lignes souples sous la forme de guides d'ondes diélectriques (11) sont utilisées pour transmettre les signaux d'émission et de réception (14, 15).

Fig. 1

Fig. 2

Fig. 3

Fig. 4

Fig. 5

Pixelpositionen $x_{pos}$ und $y_{pos}$ in der neuen 2D-Datenmatrix:

$$x_{pos} = \left[r_s(\sin(i \cdot \Delta\theta) + 1) + n \cdot \Delta x\right]/d_x$$

$$y_{pos} = r_s(\cos(i \cdot \Delta\theta) + 1)/d_y$$

$d_x$ : Abstand der Bildpixel in x-Richtung
$d_y$ : Abstand der Bildpixel in y-Richtung
$\Delta\theta$ : Winkelschrittweite
$r_s$ : Radius der Drehscheibe
$\Delta x$ : Schrittweite in x-Richtung

- - - : Pixelpositionen vor Mapping

· · · · : Pixelpositionen nach Mapping

## Fig. 6

Rohdaten

↓

Mapping der Rohdaten

↓

normalized averaging

↓

SAR-Verarbeitung
(ortsinvariantes Korrekturfilter)

↓

rekonstruierte
Daten

**Fig. 7**

Rohdaten

↓

SAR-Verarbeitung
(Ortsvariantes Korrekturfilter)

↓

Mapping der Rohdaten          optional

↓

normalized averaging

↓

rekonstruierte
Daten

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5859609 A

- DE 102005042463